# EUROPÄISCHE PATENTSCHRIFT

(11) **EP 1 972 228 B1**
(45) Veröffentlichungstag und Bekanntmachung des Hinweises auf die Patenterteilung: **07.05.2014**
(21) Anmeldenummer: 07005980.3
(22) Anmeldetag: 22.03.2007
(51) Int. Cl.: A47B 51/00, B65G 1/02

(54) **Möbel zur Aufnahme von Arbeitsmaterialien und/oder -geräten für Labor- oder Unterichtsräume und Tischgestell zur Aufnahme eines Fachbodens aus einem derartigen Möbel**
Piece of furniture for holding work materials and/or devices for laboratory or classrooms and table frame for supporting a shelf of such a piece of furniture
Meuble destiné à la saisie de matériaux et/ou appareils de travail pour salles de travail ou de classe et piètement de table destiné à la saisie d'un fond d'un tel meuble

(43) Veröffentlichungstag der Anmeldung: 24.09.2008
(73) Patentinhaber: Waldner Labor- und Schuleinrichtungen GmbH, 01097 Dresden (DE)
(72) Erfinder: Keibach, Dieter, 88267 Vogt (DE)
(74) Vertreter: Kotitschke & Heurung Partnerschaft mbB

(56) Entgegenhaltungen:
- WO-A1-00/05994
- AT-B- 340 632
- DE-A1- 2 556 093
- DE-A1- 2 753 158
- DE-C1- 19 804 118
- DE-U1- 29 716 164
- US-A- 1 504 523
- US-A- 5 586 816
- US-B1- 6 969 132

## Beschreibung

Die Erfindung betrifft ein System umfassend ein Möbel zum Aufnehmen von Arbeitsmaterialien und/oder -geräten für Labor- oder Unterrichtsräume und ein Tischgestell zum Aufnehmen eines Fachbodens aus dem Möbel.

Ein derartiges Möbel, das als Schrank ausgebildet ist, ist aus der DE 2 804 044 bekannt und enthält Fachböden, die in bestimmten Abständen in vertikaler Richtung auf bestimmten Höhen nicht höhenverstellbar in Laufschienen angeordnet sind.

DE 25 56 093 A1 offenbart einen Schrank mit einer Vielzahl von Fächern, die aus dem Schrankkorpus herausgezogen werden müssen, um diese in eine für den Benutzer bequem zugängliche Position zu bringen. DE 198 04 118 C1 offenbart eine paternosterartige Hubvorrichtung für einen Küchenschrank, mit der Körbe, die an einer Kette aufgehängt sind, in eine für den Benutzer bequem zugängliche Position verfahren werden können. In der erwünschten Position wird die gesamte Korbanordnung mittels an der Unter- und Oberseite des Küchenschranks vorgesehener Teleskopschienen aus dem Schrankkorpus herausgefahren. Eine ähnliche Hubvorrichtung ist in der DE 27 53 158 A1 beschrieben, bei der die Körbe nur in einer vorbestimmten Position aus dem Schrankkorpus durch an der Vorderseite des Schrankkorpus vorgesehene Öffnungen herausgezogen werden können. Die Führungsschienen, die ein Herausziehen der Körbe ermöglichen, werden durch die Hubvorrichtung nicht in der Höhe verstellt. In US 5,586,816 A ist ein mobiler Aufbewahrungsschrank offenbart, in dem ein innerer Schrankkorpus verstaut werden kann. Der innere Schrankkorpus kann erst nach dem Herausfahren aus dem mobilen Aufbewahrungsschrank mittels einer Hubvorrichtung in der Höhe verstellt werden.

In Labor- und Unterrichtsräumen sind die Arbeitsmaterialien und/oder Arbeitsgeräte in einem derartigen Möbel aufbewahrt. Sie müssen beispielsweise zum Aufbau von Versuchsanordnungen dem Möbel entnommen und auf einem Tisch angeordnet werden. Bei dem bekannten Schrank nach der DE 2 804 044 ist hierzu ein Rollwagen mit einem Gestell ohne Tischplatte vorgesehen und sind die Fachböden so ausgebildet, dass sie dem Schrank horizontal entnommen und auf die freien Enden des Rollwagengestells gesetzt werden können.

Diese bekannte Ausbildung hat jedoch den Nachteil, dass zum Entnehmen der Fachböden und zum Aufsetzen der Fachböden auf den Rollwagen mindestens zwei Personen erforderlich sind, da die Arbeitsmaterialien und Geräte für Versuchsaufbauten, sowie die Fachböden selbst ein hohes Gewicht haben, wobei insbesondere die obersten Fachböden nur mit einem großen Kraftaufwand zum Teil über Kopf dem Schrank entnommen werden können, was mit einer gewissen Unfallgefahr verbunden ist.

Die der Erfindung zugrunde liegende Aufgabe besteht deshalb darin, ein System zu schaffen, das so ausgestaltet ist, dass die Entnahme der Fachböden erleichtert ist.

Diese Aufgabe wird gemäß der Erfindung durch ein System gelöst, das im Patentanspruch 1 angegeben ist.

Bevorzugte Weiterbildungen und Ausgestaltungen der Erfindung sind Gegenstand der Patentansprüche 2 bis 8.

Bei dem erfindungsgemäßen Möbel sind die Fachböden in der Höhe, d. h. in vertikaler Richtung stufenlos verstellbar, so dass zur Entnahme der Arbeitsmaterialien und -geräte für den jeweiligen Versuchsaufbau der zugehörige Fachboden auf die Höhe des Rollwagens hochgefahren oder abgesenkt werden kann. Dann wird der Rollwagen in das Möbel eingefahren und wird dabei der Fachboden vom Rollwagen aufgenommen, so dass er aus dem Möbel herausgefahren werden kann.

Das erfindungsgemäße Möbel bietet somit einen Stauraum, in dem die Fachböden mit den entsprechenden Materialien und Geräten für Versuchsaufbauten so gelagert sind, dass sie mit dem Rollwagen aus dem Möbel heraus gefahren werden können. Zum Einbringen der Fachböden wird der Rollwagen mit einem Fachboden in das Möbel herein gefahren und wird der Fachboden im Möbel abgesetzt. Der Rollwagen kann dann aus dem Möbel wieder heraus gefahren werden.

Das erfindungsgemäße Möbel, das vorzugsweise in Form eines Schrankes ausgestaltet ist, kann in verschiedenen Kombinationen als Einzelschrank wandständig, als Doppelschrank wandständig oder als freistehender Doppelschrank ausgestaltet sein, was eine optimale Platzausnutzung des Raumes möglich macht.

Bei dem erfindungsgemäßen Tischgestell zum Aufnehmen eines Fachbodens aus einem Möbel, in dem auf horizontal herausnehmbaren Fachböden Arbeitsmaterialien und/oder -geräte für Labor- oder Unterrichtsräume aufgenommen sind, können die Aufnahmeschienen auf eine derartige Höhe vertikal eingestellt werden, dass der betreffende Fachboden im Möbel darauf zur Auflage kommt und anschließend aus dem Möbel herausgefahren werden kann.

Im Folgenden werden anhand der zugehörigen Zeichnung besonders bevorzugte Ausführungsbeispiele der Erfindung näher beschrieben.

Es zeigen
Fig. 1 eine Vorderansicht und eine Draufsicht eines ersten Ausführungsbeispiels des erfindungsgemäßen Möbels in Form eines wandständigen Einzelschranks,
Fig. 2 eine Draufsicht und eine Vorderansicht eines zweiten Ausführungsbeispiels des erfindungsgemäßen Möbels in Form eines wandständigen Doppelschrankes in Reihe,
Fig. 3 eine Draufsicht und eine Vorderansicht eines dritten Ausführungsbeispiels des erfindungsgemäßen Möbels in Form eines Rücken an Rücken freistehenden Doppelschranks,
Fig. 4 eine perspektivische Ansicht eines Ausführungsbeispiels des erfindungsgemäßen Möbels in Form eines Einzelschrankes,
Fig. 5 eine perspektivische Ansicht, sowie eine Detailansicht eines Rollwagens für ein erfindungsgemäßes Möbel,
Fig. 6 eine Detailansicht eines Aufnahmelagers für einen Fachboden mit Kettengetriebe,
Fig. 7 eine perspektivische Ansicht eines Ausführungsbeispiels des erfindungsgemäßen Tischgestells und
Fig. 8 eine Schnittansicht durch eine Säule des in Fig. 7 dargestellten Tischgestells.

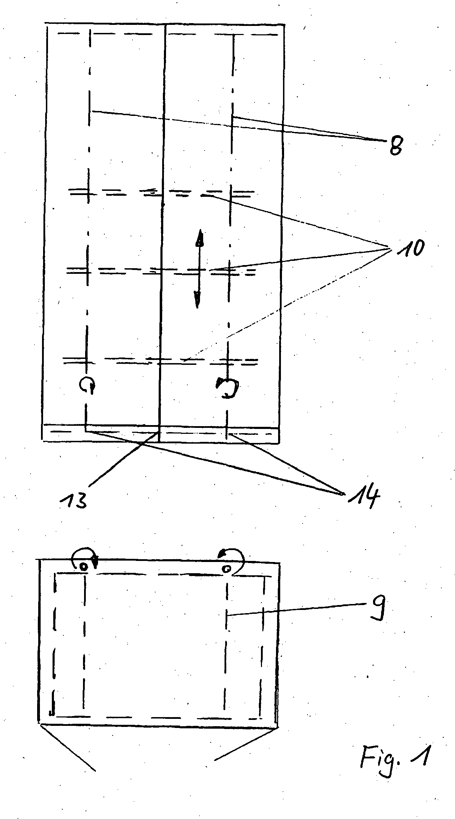

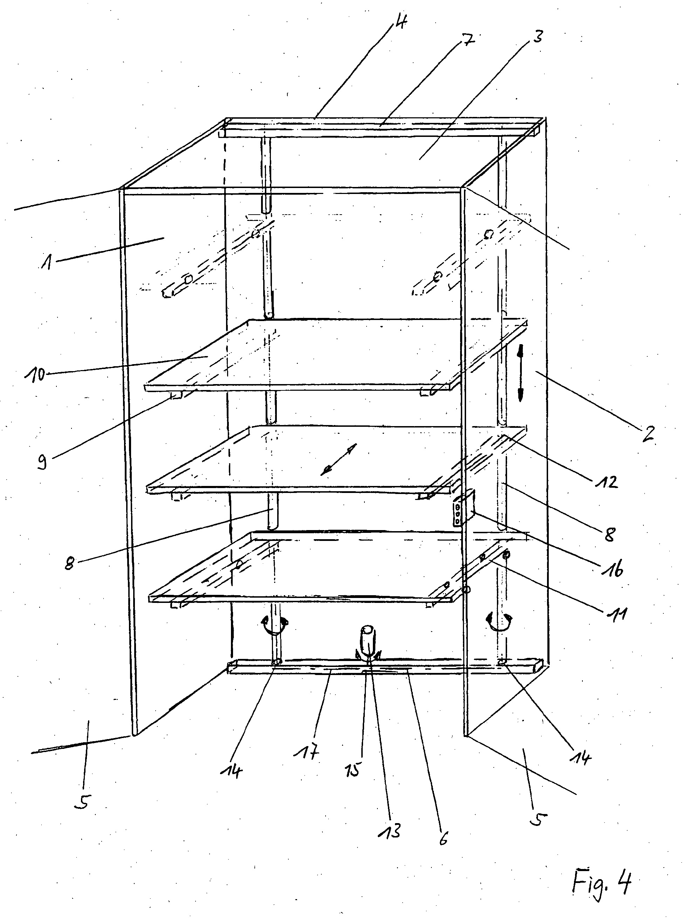

Fig. 1 und Fig. 4 zeigen ein erstes Ausführungsbeispiel des erfindungsgemäßen Möbels, das als Schrank, Regal oder ähnliches ausgebildet sein kann. Das Möbel dient zum Aufnehmen von Arbeitsmaterialien und/oder -geräten für Labor- und Unterrichtsräume und ist bei dem in Fig. 1 und 4 dargestellten Ausführungsbeispielen als Einzelschrank wandständig ausgestaltet.

Wie es in den Fig. 1 und 4 dargestellt ist, weist das Möbel einen Korpus mit einer linken Seitenwand 1, einer rechten Seitenwand 2, einem Oberboden 3 und einer Rückwand 4 auf, der mit Türen 5 versehen sein kann.

An der hinteren Unterseite des Oberbodens 3 befindet sich eine obere Führungsschiene 7 und an der Unterseite der Rückwand 4 befindet sich eine untere Führungsschiene 6. Zwischen beiden Führungsschienen 6 und 7 sind beidseitig Gewindestangen 8 angeordnet, die drehbar in den Führungsschienen 6, 7 vorgesehen sind und über einen Elektromotor 13 mit Rutschkupplung, ein T-Getriebe 15 und Winkelgetriebe 14 angetrieben werden können. T-Getriebe 15 und Winkelgetriebe 14 sind über eine Gewindestange 17 miteinander verbunden.

An den Gewindestangen 8 sind in vertikalen Abständen Bodenauflagearme 9 vorgesehen, auf denen Fachböden 10 herausnehmbar aufgenommen sind.

Tastenschalter 16 zum Ein- oder Ausschalten des Elektromotor 13 und zum Umschalten zwischen einer Aufwärts- und einer Abwärtsbewegung der Auflagearme 9 sind an der Vorderseite der rechten Seitenwand 2 vorgesehen.

Die Fachböden 10 sind an den Bodenauflagearmen 9 über Arritierungsbolzen 11 gesichert und die Bodenauflagearme 9 sind in einem Aufnahmelager 12 an den Gewindestangen 8 gehalten.

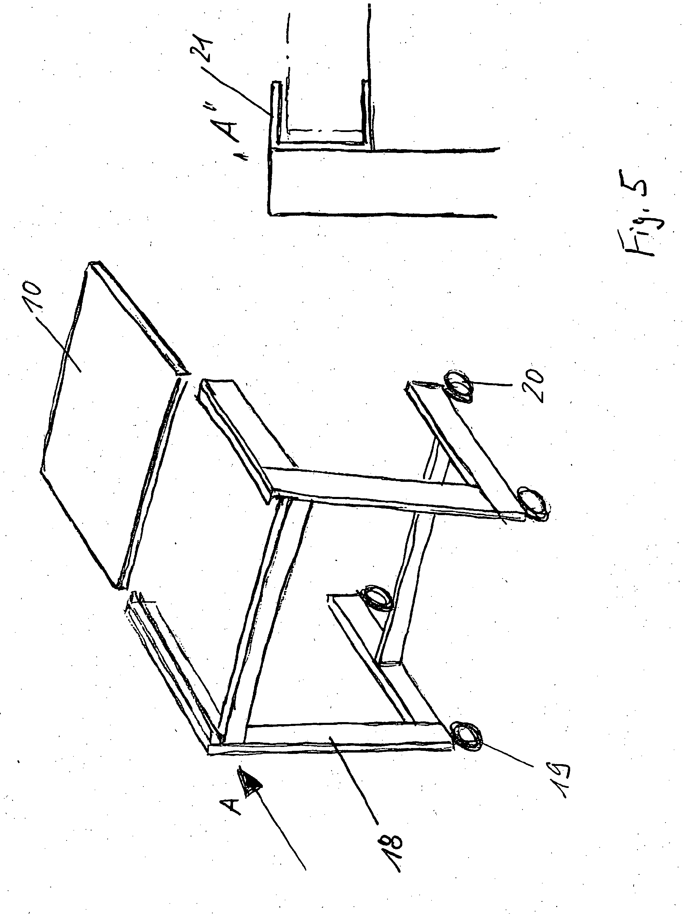

Passend zu dem in Fig. 4 dargestellten Schrankmöbel ist der in Fig. 5 dargestellte Rollwagen vorgesehen, der aus einem Gestell 18 in Form eines C-Fußes besteht, an dem feststellbare Lenkrollen 19 und nicht feststellbare Lenkrollen 20 angebracht. Der Rollwagen ist mit einem U-Profil 21 ausgebildet, das so gestaltet ist, dass ein Fachboden 10 des in Fig. 4 dargestellten Möbels aufgenommen werden kann.

Wenn in einem Unterrichts- oder Laborraum ein Versuchsaufbau mit Materialien oder Geräten erfolgen soll, die auf einem der Fachböden 10 des oben beschriebenen Möbels in dem entsprechenden Schrank aufgenommen sind, dann wird der zugehörige Fachboden auf die Höhe des Rollwagens, d. h. auf die Höhe des U-Profils 21 abgesenkt oder angehoben, wird anschließend der Rollwagen in den Schrank so eingefahren, dass der Fachboden 10 in dem U-Profil aufgenommen wird, wird anschließend der zugehörige Bodenauflagearm 9 etwas abgesenkt und wird dann der Rollwagen mit dem daran aufgenommenen Fachboden 10 aus dem Schrank heraus gefahren.

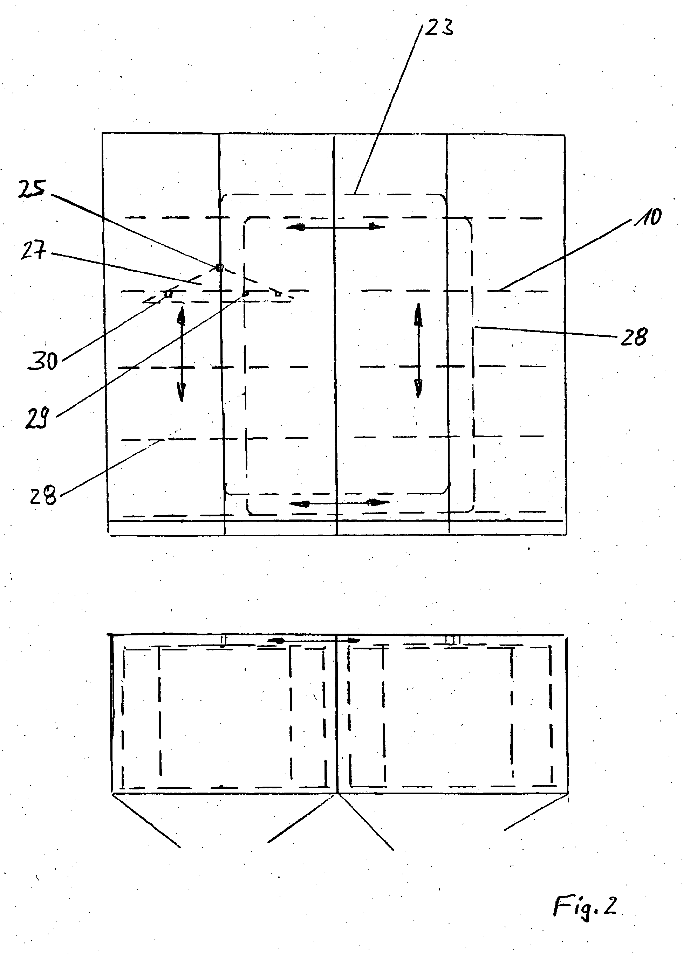

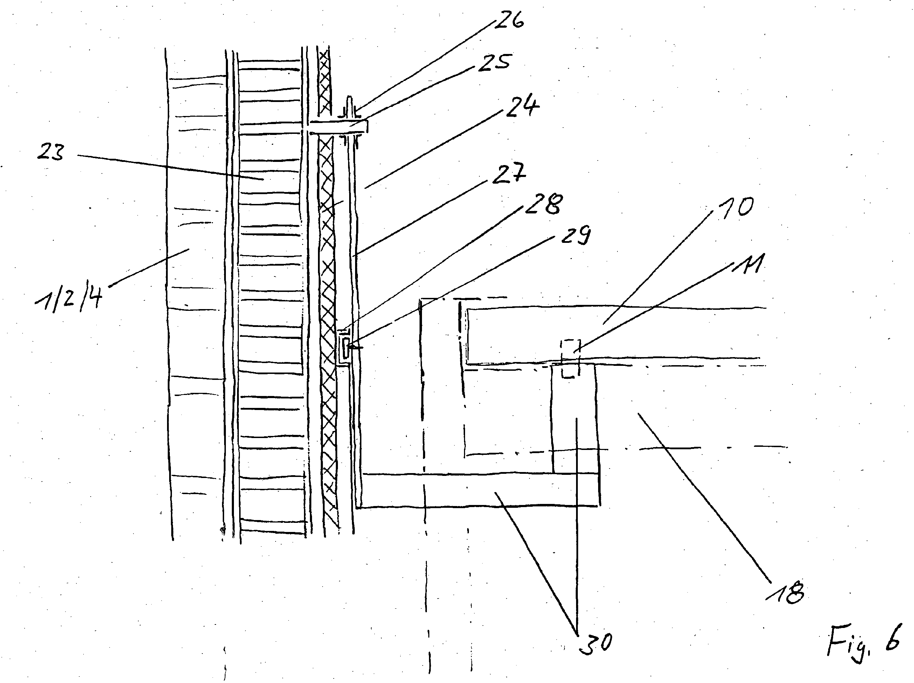

Fig. 2 zeigt ein weiteres Ausführungsbeispiel des erfindungsgemäßen Möbels in Form eines Doppelschrankes, bei dem ein Kettenantrieb 23 für die Fachböden 10 vorgesehen ist, an dem Aufnahmevorrichtungen, d. h. die Fachbodenhalterungen oder Auflagearme für die Fachböden 10 in Aufnahmezapfen 25 verfahrbar gelagert sind. Zur Stabilisierung sind die Aufnahmevorrichtungen, d. h. die Aufnahmezapfen 25 mit Fachbodenhalterungen 27 in einer Führungsnut beweglich gelagert. Hierzu sind ein Führungsprofil 28, eine Führungsrolle 29 und jeweils ein Kragarm 30 zur Aufnahme der Fachböden vorgesehen, wie es in Fig. 6 dargestellt ist.

Zum Antrieb des Kettenantriebs 23 dient ein Elektromotor mit einer Rutschkupplung, wobei die Bewegung des Kettenantriebes 23 so gestaltet ist, dass diese eine vertikale sowie auch eine horizontale Bewegung durchführen kann.

Bei diesem Doppelschrank können somit die Fachböden 10 an einer Schrankseite in vertikaler Richtung nach oben oder nach unten verfahren werden, aber auch von einer Schrankseite seitlich horizontal zur anderen Schrankseite verfahren werden, so dass insgesamt eine umlaufende Bewegung der Fachböden 10 über beide Schrankseiten möglich ist.

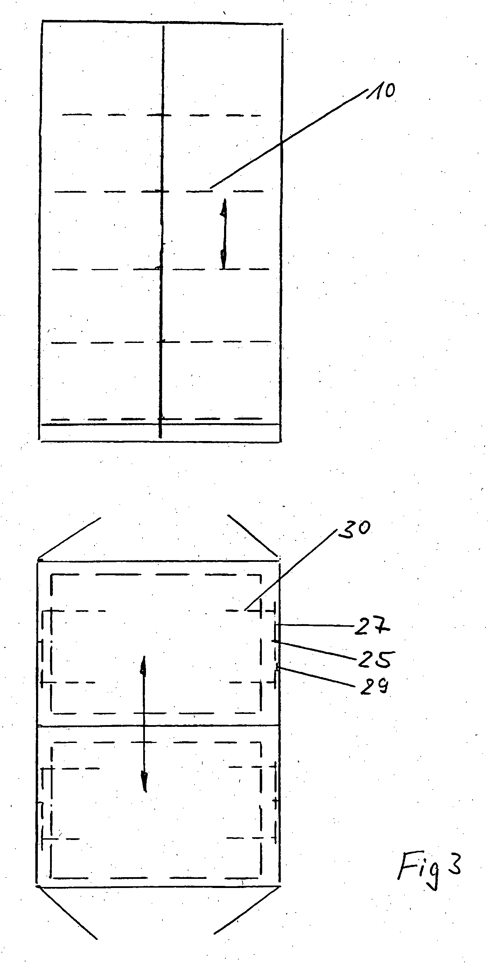

Fig. 3 zeigt ein Ausführungsbeispiel des erfindungsgemäßen Möbels als Doppelschrank Rücken an Rücken, der im Aufbau im Wesentlichen dem Doppelschrank von Fig. 2 entspricht, wobei lediglich die umlaufende Bewegung der Fachböden 10 nicht von einer Schrankseite zur anderen, sondern von dem vorderen Schrank zum hinteren oder umgekehrt erfolgt.

In Fig. 6 ist das Aufnahmelager eines Fachbodens 10 bei einem Kettenantrieb 23 im Einzelnen dargestellt.

Wie es in Fig. 6 gezeigt ist, ist zwischen einer Seitenwand oder Rückwand 1, 2 oder 4 und einer inneren Blende 24 der Kettenantrieb 23 angeordnet. Die Aufnahmezapfen 25 für die Fachbodenhalterungen gehen durch die innere Schrankblende 24 zum Kettenantrieb 23. Am schrankinnenseitigen Ende der Aufnahmezapfen 25 befindet sich die Lagerbuchse 26 für die Fachbodenhalterung 27, an der ein Kragarm 30 zur Aufnahme der Fachböden 10 mit den Arritierstiften 11 angeordnet ist. Zwischen der Schrankblende 24 und der Fachbodenhalterung 27 befindet sich das Führungsprofil 28 mit der darin angeordneten Führungsrolle für die Fachbodenhalterung 27.

Bei den oben beschriebenen Ausführungsbeispielen war der Rollwagen mit einem U-Profil 21 zur Aufnahme eines Fachbodens versehen, und wurde der Rollwagen in das Möbel so eingefahren, dass der Fachboden im U-Profil 21 aufgenommen ist. Es ist aber auch eine Ausgestaltung denkbar, bei der der Rollwagen in das Möbel eingefahren und der Fachboden von oben nach unten auf dem Rollwagen abgesenkt wird. Der Bodenauflagearm 9 kann dann etwas weiter abgesenkt werden, so dass der Fachboden 10 frei kommt und mit dem Rollwagen aus dem Möbel gefahren werden kann.

Bei einer Ausbildung als Einzelschrank, wie es in Fig. 4 dargestellt ist, können problemlos drei Fachböden 10 auf die Höhe des Rollwagens gefahren und aus dem Möbel entnommen werden. Wenn beispielsweise der mittlere Fachboden ohnehin auf der Höhe des Rollwagens angeordnet ist, kann bei der Entnahme des oberen Fachbodens dieser zusammen mit den beiden darunter liegenden Fachböden abgesenkt werden, bis der untere Fachboden am Boden aufliegt. Wenn die vertikalen Abstände regelmäßig sind, d. h. der Abstand zwischen dem mittleren Fachboden und dem oberen Fachboden dem Abstand des unteren Fachbodens zum Boden des Schrankes entspricht, ist das ohne weiteres möglich. Zur Entnahme des unteren Fachbodens erfolgt eine Bewegung der Fachböden in entgegen gesetzter Richtung, d. h. nach oben, bis der untere Fachboden in der Position angeordnet ist, die normalerweise der mittlere Fachboden einnimmt. Hierzu ist lediglich für einen ausreichenden Platz über dem obersten Fachboden zu sorgen. Wenn der Abstand des oberen Fachbodens in der Normalstellung zu dem Schrankoberboden 3 doppelt so groß wie der Abstand zwischen dem untersten Fachboden und dem mittleren Fachboden ist, ist das ohne weiteres möglich.

An den oben beschriebenen Ausführungsbeispielen der Erfindung können verschiedene Änderungen vorgenommen werden.

So können beispielsweise die Schränke mit Klapptüren, die vollverglast, teilverglast oder als volle Tür ausgebildet sind, mit Falttüren oder mit Rollläden ausgestaltet sein. Der Innenraum der Schränke kann auch so ausgebildet sein, dass der Rollwagen darin verstaut werden kann, wenn er nicht benötigt wird. Dazu muss der Rollwagen entsprechend bemessen und ausgestaltet sein.

Die Schranktüren können mit einem Schleppsockel versehen sein, so dass ein Befahren der Schränke mit Rolltischen möglich ist. Vorzugsweise fehlt der untere Boden, so dass die Schränke mit den Rolltischen befahren werden können.

Die Rolltische können weiterhin mit Führungsrollen ausgestattet sein, um die Fachböden exakt im Schrank zu positionieren.

Bei einem wandständigen Schrank in einfacher Ausgestaltung mit Mindestabmessung von ca. 1200/850/2100 mm können drei verstellbare Fachböden einschließlich eines Rollwagens verstaut werden. Bei einem wandständigen doppelten Schrank mit Mindestabmessungen von 2400/850/2100 mm können acht Fachböden einschließlich zwei Rollwägen verstaut werden. Bei einem freistehenden doppelten Schrank, bei dem die Einzelschränke Rücken an Rücken angeordnet sind und der Mindestabmessungen von 1200/1700/2100 mm hat, können mindestens acht Fachböden und zwei Rollwägen verstaut werden.

Bei einem Doppelschrank mit Kettenführung, bei dem die Einzelschränke Rücken an Rücken angeordnet sind, ist die Kettenführung vorzugsweise in einer Doppelrückwand oder beidseitig in einer doppelten Außenseite untergebracht. Der Antrieb erfolgt dabei insbesondere dadurch, dass die jeweils gegenüber liegende Seite über eine Gewindestangenverbindung von der motorbetriebenen Seite mit angetrieben wird.

Die oben beschriebene Ausbildung eines Möbels insbesondere eines Schrankes mit vertikal verstellbaren Fachböden und einem Rollwagen konstanter Höhe kann kinematisch derart umgekehrt werden, dass die Fachböden im Möbel vertikal im Wesentlichen festliegen, statt eines Rollwagens jedoch ein Tischgestell, das gleichfalls auf Rollen stehen kann, vorgesehen ist, bei dem die Aufnahmehöhe für die Fachböden vertikal verstellbar ist.

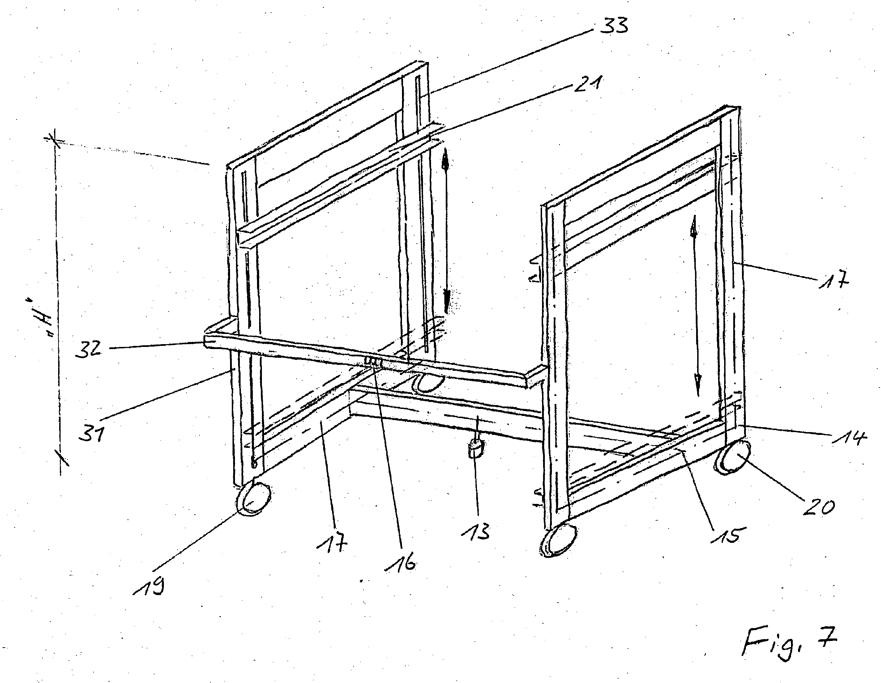

Ein Ausführungsbeispiel des entsprechenden erfindungsgemäßen Tischgestells ist in Fig. 7 dargestellt.

Bei diesem Tischgestell, das wie bei dem oben beschriebenen Möbel einen Elektromotor 13 mit Rutschkupplung, ein Winkelgetriebe 14, ein T-Getriebe 15, Tastenschalter 16 und Gewindestangen 17, sowie Lenkrollen 19 und 20 aufweist, sind Aufnahmeschienen 21 vorgesehen, die stufenlos vertikal, d. h., in ihrer Höhe verstellbar sind. Auf diesen Aufnahmeschienen können in einem entsprechenden Möbel horizontal entnehmbare Fachböden aufgenommen werden.

D. h., dass bei einem Möbel der in Fig. 4 dargestellten Art die Höhe H in Figur 7 der Höhe des obersten Bodens entspricht, wobei die Böden auf entsprechenden Armen liegen, die an der Rückwand fest gelagert sind. Die Arme können stufenweise höheneinstellbar sein.

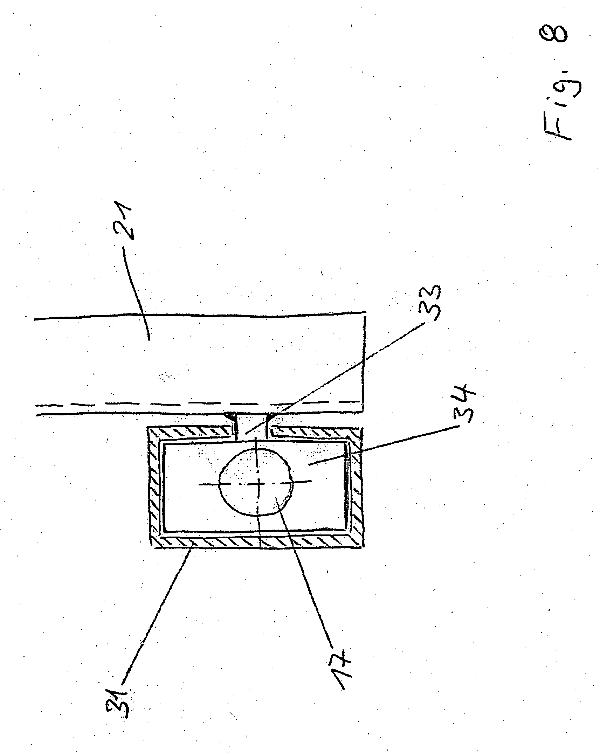

Fig. 8 zeigt ein Querschnitt durch eine Säule des Tischgestells von Fig. 7 und insbesondere die höhenverstellbare Anordnung einer Aufnahmeschiene 21. Das Tischgestell ist vorzugsweise als ein H-Fußgestell 31 ausgebildet, an dem ein Handgriff 32 mit integrierter Schaltung für die Aufwärtsbewegung, die Abwärtsbewegung und das Anhalten der Aufnahmeschienen 21 angeordnet ist, wobei diese Bewegungen über den am Tischgestell vorgesehenen Antrieb 13 bis 17 erfolgen. Eine Führungsnut 33 ist in der senkrechten Säule des Tischgestells vorgesehen und ein Führungsklotz 34 in der U-förmigen Säule steht mit der Gewindestange 17 in Verbindung.

Als eine alternative Ausgestaltung ist es auch möglich, das Tischgestell über Teleskopführungen von einer Mindesthöhe auf eine Maximalhöhe aus- und einzufahren.

Mit dem oben beschriebenen erfindungsgemäßen Tischgestell ist es gleichfalls möglich, Fachböden einem entsprechenden Möbel, insbesondere einem Schrank zu entnehmen, in dem diese horizontal entnehmbar angeordnet sind. Dazu wird das Tischgestell in das Möbel eingefahren, die Höhe der Aufnahmeschienen so eingestellt, wie es dem zu entnehmenden Fachboden entspricht, so dass dieser zur Auflage auf den Aufnahmeschienen kommt, und anschließend mit dem auf dem Aufnahmeschienen liegenden Fachboden aus dem Möbel herausgefahren.

Bei dieser Ausbildung ist es aufgrund des höhenverstellbaren Gestells möglich, im Schrank mehr als drei Fachböden, d. h., mindestens vier oder fünf Fachböden unterzubringen, was von dem Mindestabstand zueinander und damit von der jeweiligen Höhe der Materialien und Geräten eines Versuchsaufbaus abhängt.

## Patentansprüche

1. System umfassend ein Möbel zum Aufnehmen von Arbeitsmaterialien und/oder -geräten für Labor- oder Unterrichtsräume mit einem Korpus, in dem Fachböden (10) auf vertikal beabstandeten Auflagearmen (9) angeordnet sind, wobei die Fachböden (10) zur horizontalen Herausnahme aus dem Korpus bestimmt und zusammen mit den Auflagearmen (9) innerhalb des Korpus mittels eines elektromotorischen Antriebs stufenlos vertikal verstellbar sind und ein Tischgestell zum Aufnehmen eines Fachbodens (10) aus dem Möbel, wobei das Tischgestell vertikal verstellbare Aufnahmeschienen (21) aufweist zum Aufnehmen des Fachbodens.

2. System nach Anspruch 1, wobei die Aufnahmeschienen (21) stufenlos verstellbar sind.

3. System nach Anspruch 1 oder 2, mit einem elektromotorischen Antrieb für die Aufnahmeschienen (21).

4. System nach Anspruch 3, wobei der elektromotorische Antrieb ein Spindelantrieb ist.

5. System nach einem der Ansprüche 1 bis 4, wobei das Tischgestell über Teleskopführungen vertikal ein- und ausfahrbar ist.

6. System nach einer der vorhergehenden Ansprüche, wobei das Möbel zweiteilig ausgebildet ist und die Fachböden (10) vertikal und von einem Möbelteil zum anderen horizontal verstellbar angeordnet sind.

7. System nach einem der vorhergehenden Ansprüche, wobei der elektromotorische Antrieb für das Möbel ein Kettenantrieb ist.

8. System nach einem der vorhergehenden Ansprüche, wobei der elektromotorische Antrieb für das Möbel ein Spindelantrieb ist.

## Claims

1. System including a furniture for accommodating work materials and/or apparatuses for laboratory or teaching rooms having a body, in which shelves (10) are disposed on vertically spaced support arms (9), wherein the shelves (10) are constructed for horizontal removal from the body, and wherein the shelves (10) are continuously displaceable in a vertical direction together with the support arms (9) within the body by means of an electromotive drive, and a table-top support for receiving a shelf (10) from the furniture, wherein the table-top support comprises vertically displaceable shelf tracks (21) for receiving the shelf.

2. System according to claim 1, wherein the shelf tracks (21) are continuously displaceable.

3. System according to claim 1 or 2, including an electromotive drive for the shelf tracks (21).

4. System according to claim 3, when the electromotive drive is a spindle drive.

5. System according to any one of claims 1 to 4, wherein the table-top support is vertically retractable and exentendable by means of telescopic guides.

6. System according to any one of the preceding claims, wherein the furniture is constructed of two parts, and the shelves (10) are arranged to be vertically and horizontally, from one furniture part to the other, adjustable.

7. System according to anyone of the preceding claims, wherein the electromotive drive for the furniture is a chain drive.

8. System according to anyone of the preceding claims, wherein the electromotive drive for the furniture is a spindle drive.

## Revendications

1. Système comprenant un meuble destiné au rangement de matériel et/ou d'appareils de travail pour des salles de laboratoire ou d'enseignement, comportant un corps où sont disposés des tablettes (10) sur des bras de soutien (9) espacés verticalement, lesdites tablettes (10) étant prévues pour être retirées horizontalement du corps et étant réglables verticalement avec les bras de soutien (9) à l'intérieur du corps, de manière continue au moyen d'un entraînement par moteur électrique, et un bâti de table pour la réception d'une tablette (10) retirée du meuble, ledit bâti de table comportant des rails de réception (21) réglables verticalement pour la réception de la tablette.

2. Système selon la revendication 1, où les rails de réception (21) sont réglables de manière continue.

3. Système selon la revendication 1 ou 2, avec un entraînement par moteur électrique pour les rails de réception (21).

4. Système selon la revendication 3, où l'entraînement par moteur électrique est un entraînement à vis.

5. Système selon l'une des revendications 1 à 4, où le bâti de table peut être rentré et sorti verticalement au moyen de coulisses télescopiques.

6. Système selon l'une des revendications précédentes, où le meuble est réalisé en deux pièces, et où les tablettes (10) sont déplaçables verticalement, et horizontalement d'une pièce de meuble à l'autre.

7. Système selon l'une des revendications précédentes, où l'entraînement par moteur électrique prévu pour le meuble est un entraînement à chaîne.

8. Système selon l'une des revendications précédentes, où l'entraînement par moteur électrique prévu pour le meuble est un entraînement à vis.
